# EUROPÄISCHE PATENTSCHRIFT

(11) **EP 2 391 496 B1**
(45) Veröffentlichungstag und Bekanntmachung des Hinweises auf die Patenterteilung: **20.07.2016**
(21) Anmeldenummer: 10701635.4
(22) Anmeldetag: 28.01.2010
(51) Int. Cl.: B29C 53/04, B29C 51/08

(54) **VERFAHREN ZUR HERSTELLUNG EINES UMBUGS AN EINEM RAND EINES KUNSTSTOFFBAUTEILS SOWIE VORRICHTUNG ZUR DURCHFÜHRUNG DIESES VERFAHRENS**
METHOD FOR PRODUCING A FOLD ON AN EDGE OF A PLASTIC COMPONENT AND DEVICE FOR PERFORMING SAID METHOD
PROCÉDE DE FABRICATION D'UN REPLI SUR LE BORD D'UN ÉLÉMENT EN PLASTIQUE ET DISPOSITIF DE MISE EN OEUVRE DE CE PROCÉDÉ

(30) Priorität: 28.01.2009 DE 102009006367
(43) Veröffentlichungstag der Anmeldung: 07.12.2011
(73) Patentinhaber: Faurecia Innenraum Systeme GmbH, 76767 Hagenbach (DE)
(72) Erfinder: SCHILLES, Wilfried, 76870 Kandel (DE); SCHELLHASE, Jürgen, 37269 Eschwege (DE); LAMPERTIUS, Jürgen, 57548 Kirchen (DE)
(74) Vertreter: Schatt, Markus F.
(86) Internationale Anmeldenummer: PCT/EP2010/000527
(87) Internationale Veröffentlichungsnummer: WO 2010/086169

(56) Entgegenhaltungen:
- DE-U1- 9 420 596
- GB-A- 2 424 612
- US-A- 5 139 604

## Beschreibung

Die Erfindung betrifft ein Verfahren zur Herstellung eines Umbugs an einem Rand eines Kunststoffbauteils unter Formung einer unter Ausbildung einer Biegung eines Randbereich in einem quer zum Rand verlaufenden Querschnitt des Randbereichs sowie eine Herstellungsvorrichtung zur Herstellung eines Umbugs an einem Kunststoffbauteil an einem Rand unter Formung einer unter Ausbildung einer Biegung eines Randbereichs zur Durchführung dieses Verfahrens.

Die GB A 2 424 612 offenbart ein derartiges Verfahren und eine derartige Herstellungsvorrichtung sowie Stand der Technik hierzu. Bei dem Verfahren nach der GB A 2 424 612 erfolgt ein Positionieren einer Materialschicht auf einer Auflagevorrichtung, ein Erwärmen des für die Bildung des Umbugs vorgesehenen Randbereichs der Materialschicht mittels einer Heizvorrichtung, ein Anlegen eines Formwerkzeugs mit einer konvexen Formgebungsoberfläche an eine erste Seite des für die Bildung des Umbugs vorgesehenen Randbereichs, ein Bewegen zumindest eines Formstücks mit einer Formgebungskontur und anschließend ein Herausfahren des Formwerkzeugs aus dem von der ersten Seite des für die Bildung des Umbugs vorgesehenen Randbereichs umgrenzten Raums.

Aus der DE 40 07 829 A1 ist ein Verfahren zum Herstellen einer Verkleidungsplatte bekannt, u.a. aufweisend: ein gleichzeitiges Heisspressen, Zurichten und Durchstoßen eines harzimprägnierten Substrates zur Herstellung eines geformten Substrats; Auflegen eines äußeren Überzugsschichtteils auf eine Fläche des geformten Substrats unter Zwischenlage einer Schmelzklebstoffplatte dazwischen; Pressen des äußeren Überzugsschichtteiles gegen das geformte Substrat im noch heißen Zustand des geformten Substrats, um eine mit einer Überzugsschicht bedeckte, unfertige Verkleidungsplatte zu erzeugen; wobei umzubugende Randabschnitte des Überzugsschicht-Teils an den Umfangsrückabschnitten des Filzes mit Hilfe einer Haftverbindung befestigt wird.

Die DE 43 03 459 A1 offenbart eine Vorrichtung zum Kaschieren der Vorderseite eines Formteils mit einem Flächenmaterial und zum Umbugen der sich über das Formteil hinaus erstreckenden Ränder des Flächenmaterials auf die Rückseite des Formteils unter Verwendung von Stempeln, durch die die überstehenden Ränder des Flächenmaterials auf die Rückseite des Formteils umgebugt und dort fixiert werden.

Die DE 197 50 285 A1 beschreibt ein Verfahren zum Kaschieren eine Trägers sowie eine Vorrichtung zum Ausführen des Verfahrens. Dabei wird eine Trägerschicht-Deckschicht-Randzone, die den Umbug bildet, durch thermoplastisches Verschweißen miteinander verbunden.

Aus der DE 197 50 285 A1 ist ein Verfahren bekannt, bei dem in einem Hinterpresswerkzeug mit einer Tauchkante ein Kunststoff-Formteil mit einem 90-Grad-Umbug entsteht. Mittels Schieber wird der Umbug auf die Rückseite des Formteils umgelegt und aufgepresst.

Aufgabe der Erfindung ist, ein Verfahren zur Herstellung sowie eine Vorrichtung zur Durchführung dieses Verfahrens bereitzustellen, mit dem auf effiziente Weise ein Umbug an einem Rand eines Kunststoffbauteils unter Ausbildung einer Biegung in einem quer zum Rand verlaufenden Querschnitt des Randbereichs herstellbar ist.

Diese Aufgabe wird mit den Merkmalen der unabhängigen Patentansprüche gelöst. Weitere Ausführungsformen sind in den auf diese rückbezogenen Unteransprüchen angegeben.

Erfindungsgemäß ist insbesondere ein Verfahren zur Herstellung eines Umbugs an einem Rand eines Kunststoffbauteils unter Ausbildung einer Biegung in einem quer zum Rand verlaufenden Querschnitt des Randbereichs vorgesehen, Kunststoffbauteil, wobei das Kunststoffbauteil aus zumindest einem aus einer oder mehreren thermoplastischen Schichten gebildeten Vorformling mit einem für die Bildung des Umbugs vorgesehenen Bereich hergestellt wird, mit den Schritten:
▪ Positionieren einer Materialschicht auf einer Auflagevorrichtung,
▪ Erwärmen des für die Bildung des Umbugs vorgesehenen Randbereichs der Materialschicht mittels einer Heizvorrichtung,
▪ Anlegen eines Formwerkzeugs mit einer konvexen Formgebungsoberfläche an eine erste Seite des für die Bildung des Umbugs vorgesehenen Randbereichs,
▪ Bewegen zumindest eines Formstücks mit einer Formgebungskontur derart, dass die Formgebungskontur des Formstücks in Anlage mit der entgegen gesetzt zu der ersten Seite gelegenen zweiten Seite eines ersten mittleren Bereichs des für die Bildung des Umbugs vorgesehenen Randbereichs kommt, und weiteres Bewegen des zumindest einen Formstücks derart, dass ein mit der Bewegung des Formstücks zunehmender und zweiter, neben dem ersten und näher am Rand gelegener mittlerer Bereich des für die Bildung des Umbugs vorgesehenen Randbereichs in Anlage mit der Formgebungsoberfläche kommt, wobei ein Querschnittsbereich, der zwischen dem Rand und dem ersten und zweiten mittleren Bereich gelegen ist, nicht in Anlage mit der Formgebungsoberfläche gebracht wird, und wobei die jeweils erste Seite des ersten und eines zweiten mittleren Bereichs einander zugewandt liegen, so dass die erste Seite des für die Bildung des Umbugs vorgesehenen Randbereichs einen Raum umgrenzt, in dem das Formwerkzeug gelegen ist,
▪ Herausfahren des Formwerkzeugs aus dem von der ersten Seite des für die Bildung des Umbugs vorgesehenen Randbereichs umgrenzten Raums.

Nach einer Ausführungsform ist vorgesehen, dass nach dem Herausfahren des Formwerkzeugs ein Bewegen eines Schiebers auf den Querschnittsbereich vorgesehen ist, der zwischen dem Rand und dem mittleren in Anlage mit der Formgebungsoberfläche befindlichen Bereich gelegen ist, wobei der Schieber auf die zweite Seite des für die Bildung des Umbugs vorgesehenen Randbereichs aufgedrückt wird, so dass der am Rand gelegene äußere Bereich in Richtung zum ersten mittleren Bereich bewegt wird.

Bei dem erfindungsgemäßen Verfahren kann vorgesehen sein, dass durch das Bewegen des Schiebers der Querschnittsbereich vorgesehen ist, der zwischen dem Rand und dem mittleren in Anlage mit der Formgebungsoberfläche befindlichen Bereich gelegen ist, mit dessen erster Seite auf die erste Seite des Vorformlings gedrückt wird.

Für das Erwärmen des für die Bildung des Umbugs vorgesehenen Bereichs kann vorgesehen sein, dass eine Heizvorrichtung auf der ersten Seite positioniert wird und das Erwärmen des für die Bildung des Umbugs vorgesehenen Bereichs mittels einer Heizvorrichtung unter Verwendung einer Strahlenschutz-Vorrichtung zur Abschirmung von Wärmestrahlen der Strahlenschutz-Vorrichtung gegen den Bereich, der außerhalb des für die Bildung des Umbugs vorgesehenen Bereichs gelegen ist, vorgenommen wird.

Erfindungsgemäß kann als weiterer Verfahrensschritt vorgesehen sein, dass vor dem Anlegen des Formwerkzeugs an den für die Bildung des Umbugs vorgesehenen Randbereich das Verformungsteil gekühlt wird.

Dabei kann die Formgebungsoberfläche des Formwerkzeugs derart behandelt sein, dass diese bei dem Anlegen des Formwerkzeugs an den für die Bildung des Umbugs vorgesehenen Randbereich eine Temperatur von 50 bis 100 Grad Celsius hat.

Nach einer weiteren Ausführungsform des erfindungsgemäßen Verfahrens kann das In-Anlage-Bringen des ersten mittleren Bereichs des für die Bildung des Umbugs vorgesehenen Randbereichs mit der Formgebungsoberfläche des Formwerkzeugs durch die Bewegung eines ersten Formstücks und das anschließende In-Anlage-Bringen des zweiten mittleren Bereichs des für die Bildung des Umbugs vorgesehenen Randbereichs mit der Formgebungsoberfläche des Formwerkzeugs durch die Bewegung eines zweiten Formstücks erfolgen.

Dabei kann insbesondere vorgesehen sein, dass die Bewegung des ersten Formstücks und des zweiten Formstücks zum In-Anlage-Bringen des jeweiligen mittleren Bereichs des für die Bildung des Umbugs vorgesehenen Randbereichs mit der Formgebungsoberfläche des Formwerkzeugs jeweils eine Linearbewegung ist.

Nach einem weiteren Aspekt der Erfindung ist eine Herstellungsvorrichtung zur Herstellung eines Umbugs an einem Rand eines Kunststoffbauteils unter Ausbildung einer Biegung in einem quer zum Rand verlaufenden Querschnitt des Randbereichs vorgesehen. Das Kunststoffbauteil ist aus zumindest einem aus einer oder mehreren thermoplastischen Schichten gebildeten Vorformling mit einem für die Bildung des Umbugs vorgesehenen Bereich herzustellen. Die erfindungsgemäße Herstellungsvorrichtung weist auf:
▪ eine Auflagevorrichtung zur Auflage einer umzuformenden Materialschicht,
▪ eine Heizvorrichtung,
▪ ein Formwerkzeug mit einer konvexen Formgebungsoberfläche, das mittels einer Stellmechanik gegenüber der Auflagevorrichtung zwischen einer Ausgangsstellung und einer Formgebungsstellung bewegbar ist,
▪ zumindest ein Formstück, das mittels einer Stellmechanik gegenüber der Auflagevorrichtung zwischen einer Ausgangsstellung und einer Formgebungsstellung, in der eine Innenfläche (44, 55) des zumindest einen Formstücks (40,50) der Formgebungsoberfläche (23) des Formwerkzeugs (20) zugewandt ist, bewegbar ist, bewegbar ist, um einen ersten mittleren Bereich des für die Bildung des Umbugs vorgesehenen Randbereichs einer auf der Auflagevorrichtung gelegenen Materialschicht mit der Formgebungsoberfläche des Formwerkzeugs in Anlage zu bringen,
wobei in der Formgebungsstellung des Formwerkzeugs das zumindest eine Formstück in dessen Formgebungsstellung derart bewegbar ist, dass die Innenfläche des zumindest einen Formstücks relativ zu der Formgebungsoberfläche bewegbar ist, so dass ein mit der Bewegung des Formstücks zunehmender und zweiter, neben dem ersten und näher am Rand gelegener mittlerer Bereich des für die Bildung des Umbugs vorgesehenen Randbereichs in Anlage mit der Formgebungsoberfläche gebracht werden kann, wobei ein Querschnittsbereich, der zwischen dem Rand und dem ersten und zweiten mittleren Bereich gelegen ist, nicht in Anlage mit der Formgebungsoberfläche gebracht werden kann.

Die Herstellungsvorrichtung kann ein zweites bewegbares Formstück aufweisen für das In-Anlage-Bringen des zweiten mittleren Bereichs des für die Bildung des Umbugs vorgesehenen Randbereichs mit der Formgebungsoberfläche des Formwerkzeugs, wobei die Bildung des Umbugs durch die Bewegung des zweiten Formstücks erfolgt.

Die Heizvorrichtung kann mittels einer Stellmechanik gegenüber der Auflagevorrichtung zwischen einer Ausgangsstellung und einer Betriebsstellung bewegbar sein.

Die Heizvorrichtung kann eine Wandfläche aufweisen, die quer zur Längserstreckung des Randbereichs und derart verläuft, dass die von der Heizvorrichtung ausgehende Wärme von der Wandfläche in Bezug auf den Bereich, der über den zur Umbugbildung vorgesehenen Randbereich hinausgeht, abgehalten wird.

Der mit dem erfindungsgemäßen Verfahren bzw. mit der erfindungsgemäßen Vorrichtung hergestellte Umbug dient zur Verstärkung oder zur Versteifung des Rands. Auch kann der Umbug zum Schutz des Bauteilmaterials entlang des Rands vor Abnutzung durch einen Nutzer eines Anwendungsgegenstands mit dem Bauteil vorgesehen sein.

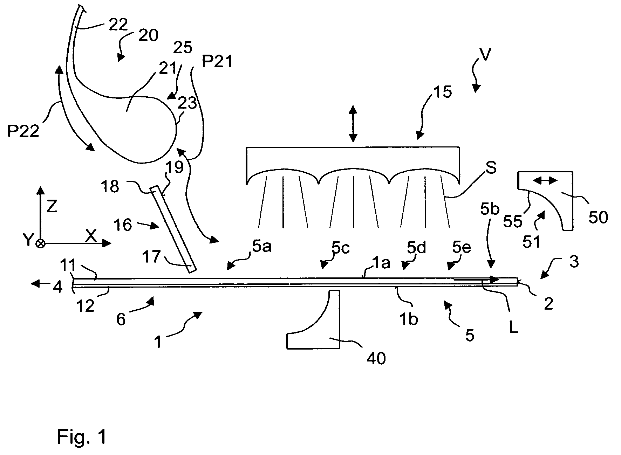

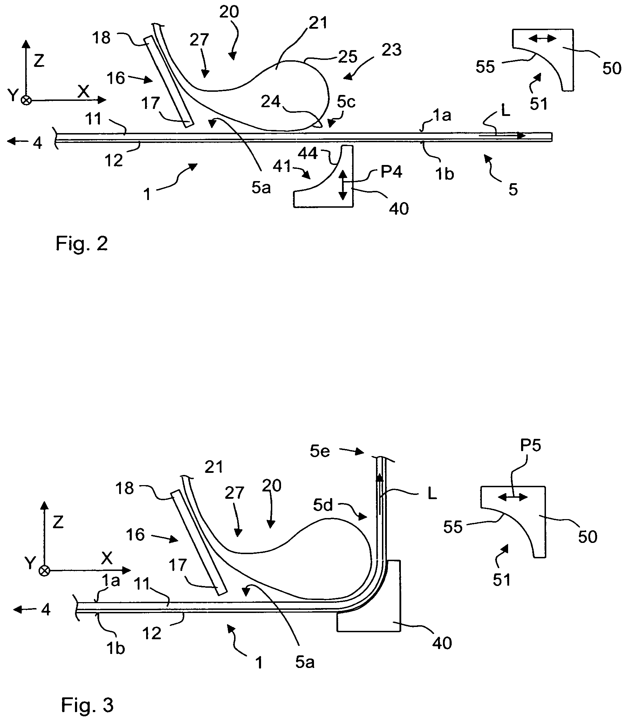

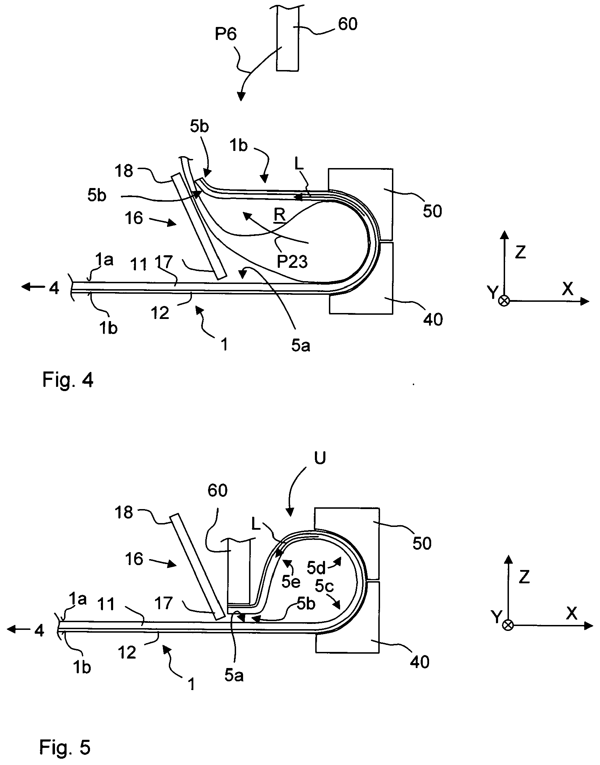

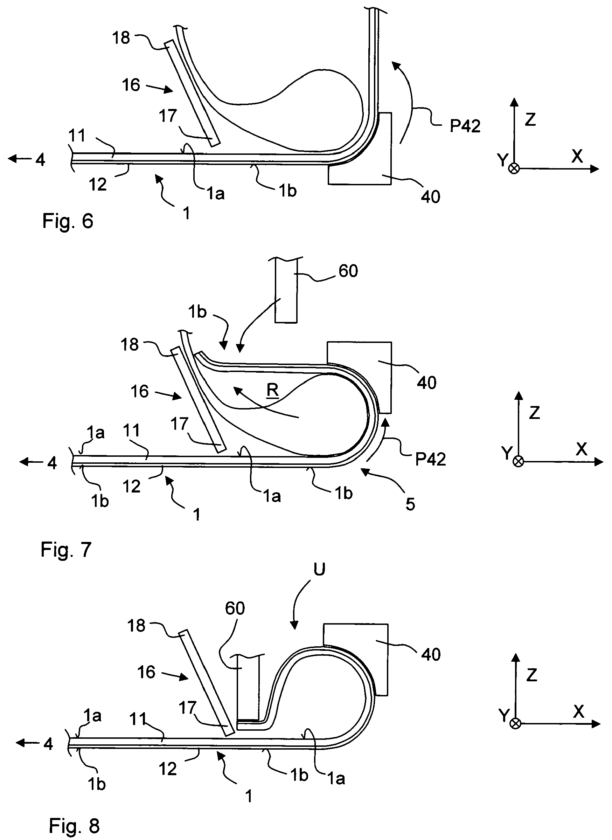

Im Folgenden werden Ausführungsformen der Erfindung an Hand der beigefügten Figuren beschrieben, die zeigen:
▪ Figur 1 eine schematische Schnittdarstellung einer Ausführungsform der erfindungsgemäßen Herstellungsvorrichtung mit einem Materialschicht zur Herstellung eines Kunststoffbauteils und insbesondere eines Innenverkleidungsteils mit einem Umbugabschnitt, wobei sich die Herstellungsvorrichtung in einer ersten Konfiguration, bei der das Materialschicht mit einer Heizvorrichtung erwärmt wird, und das Materialschicht in einem ersten Zustand befindet,
▪ Figur 2 die Ausführungsform der erfindungsgemäßen Herstellungsvorrichtung mit dem Materialschicht zur Herstellung des Kunststoffbauteils nach der Figur 1, wobei sich die Herstellungsvorrichtung in einer zweiten Konfiguration, bei der ein Formwerkzeug auf das Materialschicht aufgesetzt ist, und das Materialschicht in einem ersten Zustand befindet,
▪ Figur 3 die Ausführungsform der erfindungsgemäßen Herstellungsvorrichtung mit dem Materialschicht zur Herstellung des Kunststoffbauteils nach der Figur 1, wobei sich die Herstellungsvorrichtung in einer dritten Konfiguration, bei der zusätzlich zwei Formstücke das Materialschicht abschnittsweise in Anlage mit dem Formwerkzeug gebracht ist,
▪ Figur 4 die Ausführungsform der erfindungsgemäßen Herstellungsvorrichtung mit dem Materialschicht nach der Figur 1, wobei sich die Herstellungsvorrichtung in einer vierten Konfiguration befindet, bei der die zwei Formstücke das Materialschicht gegenüber der Figur 3 einen größeren Flächenabschnitt in Anlage mit dem Formwerkzeug gebracht ist,
▪ Figur 5 die Ausführungsform der erfindungsgemäßen Herstellungsvorrichtung mit dem Materialschicht nach der Figur 1, wobei sich die Herstellungsvorrichtung in einer fünften Konfiguration befindet, bei der die ein Schieber das Materialschicht gegenüber der Figur 4 in einen Endzustand gebracht ist, in dem der Umbugabschnitt ausgebildet ist,
▪ Figur 6 eine weitere Ausführungsform der erfindungsgemäßen Herstellungsvorrichtung, bei der nur ein Formstück zur Verformung der Materialschicht verwendet wird, wobei sich die Herstellungsvorrichtung in einer Konfiguration analog der in der Figur 4 gezeigten Konfiguration befindet,
▪ Figur 7 die Ausführungsform der erfindungsgemäßen Herstellungsvorrichtung nach der Figur 6, wobei sich die Herstellungsvorrichtung in einer Konfiguration analog der in der Figur 4 gezeigten Konfiguration befindet,
▪ Figur 8 die Ausführungsform der erfindungsgemäßen Herstellungsvorrichtung nach der Figur 6, wobei sich die Herstellungsvorrichtung in einer Konfiguration analog der in der Figur 4 gezeigten Konfiguration befindet, bei der die ein Schieber das Materialschicht gegenüber der Figur 4 in einen Endzustand gebracht ist, in dem der Umbugabschnitt ausgebildet ist.

Die schematische Schnittdarstellung der Figur 1 zeigt eine Ausführungsform der erfindungsgemäßen Herstellungsvorrichtung V, in die eine Materialschicht 1 zur Durchführung des erfindungsgemäßen Herstellungsverfahrens zur Herstellung eines Kunststoffbauteils und insbesondere eines Innenverkleidungsteils mit einem Umbugabschnitt eingelegt ist.

Das herzustellende Kunststoffbauteil kann generell ein Bauteil mit einem Umbugabschnitt und kann insbesondere ein Innenverkleidungsteil für die Anwendung im Innenraum eines Kraftfahrzeugs sein. Dabei kann das Innenverkleidungsteil ein Verkleidungsteil einer Seitentür sein, das im montierten Zustand mit dessen Oberseite dem Innenraum zugewandt ist. Das Kunststoffbauteil oder das Innenverkleidungsteil weist einen Rand entlang der Außenseite oder entlang einer Ausnehmung desselben auf. Entlang eines Abschnitts des Rands ist bei dem herzustellenden Bauteil der Umbug ausgebildet, wobei ein Randabschnitt um die Längsrichtung des Rands von einer Oberseite 1 b aus gesehen zur entgegengesetzt zu dieser gelegenen Rückseite 1 a hin umgebogen ist und dadurch einen Umbugabschnitt ausbildet. Der Rand kann ein Rand zur Bildung einer Öffnung sein. Auch kann das herzustellende Bauteil oder das Innenverkleidungsteil auch ein vorsehendes Teil und in letzterem Rall insbesondere ein Rand eines vorstehenden Teils und z.B. einer Kartentasche sein.

Als Ausgangsmaterial oder Halbzeug für die Durchführung des erfindungsgemäßen Verfahrens wird eine Materialschicht 1 verwendet, die Bestandteil eines Vorformlings mit einem Rand 2 an einem ersten Ende 3 ist. Quer zum Verlauf des Rands 2 oder des ersten Ende 3 gesehen ist entgegen gesetzt zu dem ersten Ende 3 ein zweites Ende 4 gelegen. Von dem zweiten Ende 4 zu dem ersten Ende 3 des Randbereichs und quer zur Längserstreckung des Rands 2 verläuft die im Folgenden insbesondere betrachtete Längserstreckung L oder Längsrichtung des Randbereichs des Vorformlings 1. Der Rand 2 kann ein Ende der flächigen Erstreckung des Vorformlings 1 oder der umlaufende oder nicht umlaufende Rand einer Ausnehmung sein. Das Material der Materialschicht ist aus Kunststoff mit der Eigenschaft gebildet, das dieses durch entsprechende Erwärmung plastifizierbar ist.

Der Vorformling 1 wird in einem Verformungsvorgang aus einem Kunststoff-Halbzeug oder Kunststoff-Halbzeugen gebildet, der dem erfindungsgemäßen Verfahren vorausgehen kann oder Teil desselben sein kann. Dabei können grundsätzlich unterschiedliche Verformungsverfahren zur Herstellung des Vorformlings 1 vorgesehen sein, wobei der Vorformling 1 in dem Verfahrensschritt zur Herstellung eines Umbugabschnitts nach der Figur 1 in einem abgekühlten Zustand vorliegt. In diesem Schritt ist das Ausgangsmaterial des Vorformlings 1 nicht oder nicht mehr in einem plastischen, jedoch formstabilen Zustand.

Zur Orientierung ist in den Figuren ein XYZ-Koordinatensystem angegeben. Dabei erstreckt sich der zu dem Rand 2 gehörende Randbereich 5 des Vorformlings 1 in der XY-Ebene. In der Darstellung der Figuren verläuft der Rand 2 oder die Längsrichtung des Rands 2 entlang der Y-Richtung. In Bezug auf die Längserstreckung des Rands 2 wird somit derjenige in den Figuren dargestellte Querschnitt des Vorformlings 1 betrachtet, der sich quer zur Längsrichtung des Rands 2 erstreckt. Der Rand kann grundsätzlich auch einen gekrümmten Verlauf haben, sofern die Materialeigenschaften der Materialschicht 1 entsprechende Verzerrungen der Schicht zulassen, wie diese bei der Bildung des jeweiligen Umbugs erforderlich sind.

Weiterhin ist in den Figuren die Umbug-Querschnittslängsrichtung L eingetragen, in dessen Richtung sich der Querschnitt des Materials erstreckt, der zu dem herzustellenden Umbug verformt wird.

Die Herstellung des Vorformlings 1 kann z.B. durch ein Spritzgussverfahren und dabei insbesondere durch ein sogenanntes One-Shot-Verfahren oder mittels eines Press-Verformungsverfahrens hergestellt worden sein. Der Vorformling 1, in der Figur 1 als sich eben erstreckendes Gebilde dargestellt, hat generell eine dreidimensional zu beschreibende Gestalt.

Die Materialschicht 1 kann aus einer Schicht oder aus mehr als einer Schicht gebildet sein. Nach einer Ausführungsform sind zwei Schichten als Ausgangsmaterial für das erfindungsgemäße Verfahren vorgesehen. Dabei können insbesondere eine erste Materialschicht 11 als Trägermaterial zur Bildung einer Trägerschicht oder unteren Schicht des herzustellenden Bauteils und eine zweite Materialschicht 12 als Dekormaterial zur Bildung einer Dekorationsschicht oder oberen Schicht des herzustellenden Bauteils verwendet werden. Weiterhin können dabei auch zusätzliche Material-Zwischenschichten verwendet werden, die zwischen der ersten und der zweiten Materialschicht gelegen sind.

Als Material für die Träger-Schicht ist insbesondere ein Kunststoff und speziell eine Polypropylen (PP)-gebundene Fasermatte vorgesehen. Diese kann insbesondere durch Wärmezufuhr plastifizierbar sein. Die Träger-Schicht ist vorzugsweise aus einem Fasermaterial, vorzugsweise aus Naturfasern oder Glasfasern sowie aus Kunststoff-Fasern und insbesondere Polypropylen (PP)-Fasern gebildet. Alternativ oder zusätzlich kann auch das sogenannte Nature-Fibre-PP (NFPP) und/oder Glasfaser-PP verwendet werden. Die Naturfasern können aus Flachs oder Kenaf, Hanf, Sisal, Leinen oder Baumwolle gebildet sein. Auch können eine Kombination von mehreren Arten der genannten Naturfasern in der Trägerschicht verwendet werden. Die Fasern werden diese Fasern in einem vorbereitenden oder einem dem Verfahren vorangehenden Schritt zu einer Matte geformt. Anschließend werden unter Anwendung von Druck und Temperatur unter Aufschmelzung des Kunststoff-Anteiles ein miteinander verbundenes plastisches Matten-Material zur erfindungsgemäßen Verwendung als eine Trägerschicht oder eine erste oder zweite Schicht gebildet.

Die Dekorschicht kann aus einer Schaumschicht und einer Folie oder einer textilen Schicht gebildet sein. Insbesondere kann die Dekorschicht eine Kompakt-Folie sein. Die Folienschicht kann insbesondere aus TPO (Thermoplast-Polyolefin) oder aus PVC (Polyvinylchlorid) gebildet sein.

Außer der Dekorations- und der Trägerschicht können bei dem erfindungsgemäßen Verfahren zusätzlich zumindest eine Zwischen-Schicht und/oder eine VerstärkungsSchicht, wie z.B. eine Schicht aus Glasfaser-Gewebe verwendet werden, die zwischen der Material- und der Dekorschicht oder unterhalb der Trägerschicht, also auf der zur der der Dekorschicht zugewandten Seite entgegengesetzt gelegenen Seite der Trägerschicht gelegen sein kann.

Im Folgenden wird das erfindungsgemäße Verfahren generell für einen Vorformling 1 beschrieben, der beispielsweise in einem Anwendungsfall aus einer ersten Schicht 11 und einer auf dieser gelegenen zweiten Schicht 12 gebildet ist. In dem Schritt der Vorverformung des Ausgangsmaterials zu einem Vorformling 1 sind die beiden Schichten 11, 12 miteinander verbunden und z.B. im erwärmten Zustand miteinander verklebt worden. Für den Fall, dass nur eine Schicht oder mehr als zwei Schichten als Bestandteile der Materialschicht des Vorformlings 1 vorgesehen sind, sind die erfindungsgemäßen Merkmale in entsprechender Weise anzupassen. Bei der in den Figuren dargestellten Ausführungsform eines aus zwei Schichten 11, 12 aufgebauten Vorformlings 1 ist die im Ausgangszustand (Figur 1) in Bezug auf die Z-Richtung unten liegende Schicht die erste oder äußere Schicht 11 des Vorformlings 1 bzw. des herzustellenden Bauteils und die unten liegende Schicht die zweite oder innere Schicht 12 desselben. In diesem Fall kann die erste Schicht 11 eine Trägerschicht und die zweite Schicht 12 eine Dekorschicht sein. Als die erste Oberfläche des Vorformlings 1 wird in diesem Zusammenhang die freiliegende Oberfläche 1a des Trägerteils 11 und als die zweite Oberfläche des Vorformlings 1 wird in diesem Zusammenhand die freiliegende Oberfläche 1 b der Dekorschicht 12 definiert. Für den Fall, dass der Vorformling 1 zur Herstellung eines Innenverkleidungsteils vorgesehen ist, bildet die Oberfläche 1a des Trägerteils 11 die Innenseite des herzustellenden Innenverkleidungsteils, d.h. diejenige Seite, die entgegengesetzt zu der zweiten Seite gelegen ist, die im eingebauten Zustand des Innenverkleidungsteils Die erste 11 und die zweite 12 Schicht werden bei der dargestellten Ausführungsform übereinander oder gegebenenfalls eine einzelne Schicht wird auf eine Auflagevorrichtung (nicht dargestellt) gelegt. Die Auflagevorrichtung kann Bestandteil der erfindungsgemäßen Herstellungsvorrichtung, die in den Figuren im Ganzen nicht dargestellt ist.

In der Figur 1 befindet sich die Herstellungsvorrichtung in einer ersten Konfiguration, bei der die Ausgangs-Materialschicht, in der dargestellten Ausführungsform bestehend aus einer Kombination aus einer Trägerschicht 11 und einer Dekorschicht 12, mittels einer Heizvorrichtung 15 erwärmt wird, und sich die Materialschicht oder der Vorformling 1 in einem ersten Zustand oder Ausgangszustand befindet, bei dem der für den Umbug vorgesehene Bereich 4 nach der Bildung des Vorformlings 1 für die Umbugbildung noch nicht verformt ist und insbesondere entlang der XY-Ebene erstreckt. In der Figur 1 sind schematisch mehrere Wärmestrahlen dargestellt, von denen einer beispielhaft mit dem Bezugszeichen S versehen ist. Bei der zweischichtigen Bildung des Vorformlings 1 liegt die Trägerschicht 11 in Bezug auf die Schwerkraftrichtung oben, also auf der Dekorschicht 12.

Die Heizvorrichtung 15 kann als mittels einer Befestigungsvorrichtung der Herstellungsvorrichtung V räumlich fixierte oder mittels einer Stellmechanik gegenüber der Auflagevorrichtung bewegbare Einrichtung ausgeführt sein. Bei der Ausführung der Heizvorrichtung 15 mit einer Stellmechanik ist diese gegenüber der Auflagevorrichtung zwischen einer Ausgangsstellung und einer in der Figur 1 gezeigten Betriebsstellung bewegbar. Die Heizvorrichtung 15 ist vorzugsweise derart ausgebildet, dass der für den Umbug vorgesehene Bereich 5 flächig entlang des Rands 2 schnell erwärmt und in einen plastischen Zustand gebracht werden kann. Dazu kann die Heizvorrichtung 15 z.B. aus einem Infrarot-Strahler oder einem Heißgaserzeuger zur Erwärmung des Vorformlings 1 mittels erwärmtem Gas gebildet sein.

Die Herstellungsvorrichtung V weist eine insbesondere plattenförmig geformte Strahlenschutz-Vorrichtung 16 mit einem ersten Ende 17, einem zweiten Ende 18 und einer der Heizvorrichtung 15 zugewandten und zwischen dem ersten und dem zweiten Ende gelegenen Wandfläche 19 auf. Zwischen der Materialschicht 1 und dem ersten Ende 17 der Strahlenschutz-Vorrichtung 16 ist ein derart geringer Zwischenraum ausgebildet, dass dieser ein Durchlassen von Wärmestrahlen, die mittels einer aktiv geschalteten Heizvorrichtung 15 erzeugt worden sind, in vorbestimmten Maße verhindert. Die Wandfläche 19 verläuft quer zur Längserstreckung des Randbereichs 5 und derart, dass die von der Heizvorrichtung 15 ausgehende Wärme über die Wandfläche 19 oder den zur Umbugbildung vorgesehenen Randbereich 5 hinaus keine Wärmewirkung auf das Material des Vorformlings 1 ausübt. Die Heizvorrichtung 15 ist dafür vorgesehen, die Materialschicht 1 bzw. die Trägerschicht 11 und die Dekorschicht 12 den für den Umbug vorgesehenen Bereich 5 derart zu erwärmen, dass dieser zur Ausbildung des Umbugs in einen verformbaren und insbesondere plastischen Zustand gebracht sind. In dem Bereich zwischen der Strahlenschutz-Vorrichtung 16 und dem Rand 2 ist der Rand 5 aus einem nahe der Strahlenschutz-Vorrichtung 16 gelegenen Bereich 5a, einem nahe dem Rand 2 gelegenen Bereich 5b und zwischen den Bereichen 5a und 5b gelegenen mittleren Bereichen 5c, 5d und 5e gebildet. Dabei liegt - im Querschnittsverlauf des Vorformlings quer zur Längserstreckung des Rands 3 gesehen - der Bereich 5c näher an dem innen liegenden Bereich 5a und der Bereich 5d näher an dem ganz außen und am Rand 2 liegenden Bereich 5a, wobei der Bereich 5e zwischen de Bereichen 5d und 5b gelegen ist. Durch Aktivierung der Heizvorrichtung 15 wird die Erwärmung der Kombination aus der Trägerschicht 1 und der Dekorschicht 2 lokal auf die Bereiche 5a, 5b, 5c des für die Bildung des Umbugs vorgesehenen Bereichs 5 eingeschränkt. Wie in der Figur 1 gezeigt ist, erstreckt sich die Strahlenschutz-Vorrichtung 16 oder deren Wandfläche 19 quer zur Längserstreckung der Trägerschicht 11 und der Dekorschicht 12, wenn sich diese in ihrem Ausgangszustand gemäß der Darstellung der Figur 1 befinden. Dabei liegt das erste Ende 17 knapp oberhalb der Rückseite 1a des Vorformlings 1.

Die Strahlenschutz-Vorrichtung 16 kann als mittels einer Befestigungsvorrichtung der Herstellungsvorrichtung V räumlich fixierte oder mittels einer Bewegungsmechanik gegenüber der Auflagevorrichtung bewegbare Einrichtung der Herstellungsvorrichtung V ausgeführt sein.

Nachdem die Materialschicht des Vorformlings 1, also z.B. die Trägerschicht 11 und die Dekorschicht 12 mittels der Heizvorrichtung 15 in einen plastifizierten Zustand gebracht worden sind, wird die Heizvorrichtung 15 deaktiviert und, falls diese an eine Stellmechanik gekoppelt ist, in ihre Ausgangsstellung zurückgefahren und somit von dem Verformling 1 entfernt.

Anschließend wird ein mittels einer Stellmechanik gegenüber der Auflagevorrichtung zwischen einer Ausgangsstellung und einer Betriebsstellung oder Formgebungsstellung bewegbares Formwerkzeug 20 an einer vorbestimmten Stelle und auf vorbestimmte Weise von oben an den Randbereich 5 des Vorformlings 1 angelegt. Das Formwerkzeug 20 weist ein Formgebungsteil 21 und ein Betätigungsteil 22 auf, mit dem das Formwerkzeug 20 maschinell oder manuell bewegt werden kann. Das Formgebungsteil 21 weist eine Formgebungsoberfläche 23 auf, die geeignet ist, das durch Anlage der Materialschicht des Vorformlings 1 und bei der dargestellten Ausführungsform der Kombination aus der Trägerschicht 1 und der Dekorschicht 2 an die Formgebungsoberfläche 23 zu einem Umbug vorgegebener Gestalt verformt werden kann. Die Formgebungsoberfläche 23 ist zu diesem Zweck zumindest in dem Bereich des Querschnitts konvex gebildet, an den der Randbereich 5 des Vorformlings 1 zur Bildung des Umbugs angelegt wird.

Das Formwerkzeug 20 befindet sich in der Formgebungsstellung (Figuren 2, 3, 4 sowie Figuren 6 und 7), wenn der für den Umbug vorgesehene Bereich 5 zunehmend an die Formgebungsoberfläche 23 angelegt wird. Die Stellbewegung des Formwerkzeugs 20 von einer Ausgangsstellung (Figur 1) in die Formgebungsstellung ist schematisch mit dem Pfeil P21 dargestellt. Die Stellmechanik zur Ausführung der Stellbewegung des Formwerkzeugs 20 kann in verschiedner Weise realisiert sein. Insbesondere kann vorgesehen sein, dass die Stellbewegung linear ist. Dies kann mit einer einfachen Stellmechanik oder Stellkinematik realisiert werden. Alternativ kann vorgesehen sein, dass das Formwerkzeuge 20 bei dieser Stellbewegung eine Schwenkbewegung ausführt (P22). Auf diese Weise kann eine vorteilhafte Ausnutzung des zur Verfügung stehenden Raums und/oder ein effizientes Herausfahren des Formwerkzeugs aus der Formgebungsstellung insbesondere unter Berücksichtigung der in dieser Situation vorgesehenen Gestalt des Randbereichs 5 erfolgen. Dabei wird zunächst der mittlere Abschnitt 5b und danach der äußere, dem Rand 2 nahe gelegene Abschnitt des Bereichs 5 mit der Formgebungsoberfläche 23 in Anlage gebracht. Hierzu ist zumindest ein Formstück 40 oder sind ein erstes 40 und ein zweites 50 Formstück vorgesehen. In den Figuren 1 bis 5 ist eine Ausführungsform des erfindungsgemäßen Verfahrens bzw. der erfindungsgemäßen Herstellungsvorrichtung dargestellt, bei der zwei Formstücke 40, 50 zum In-Anlage-Bringen des Randbereichs 5 mit der Formgebungsoberfläche 23 des Formwerkzeugs 20 verwendet werden. In den Figuren 6 bis 8 ist eine alternative Ausführungsform des erfindungsgemäßen Verfahrens bzw. der erfindungsgemäßen Herstellungsvorrichtung dargestellt, bei der nur ein Formstück 40 zum In-Anlage-Bringen des Randbereichs 5 mit der Formgebungsoberfläche 23 des Formwerkzeugs 20 verwendet wird. Die Formgebungsoberfläche 23 ist somit ein Oberflächenbereich, der dazu bestimmt ist, dass die im Ausgangszustand des Vorformlings 1 nach oben gerichtete oder die der Formgebungsoberfläche 23 zugewandte Oberseite 1 a mit dieser in Anlage gebracht wird, um eine vorbestimmte Verformung des Randbereichs 5 zur Ausbildung des Umbugs zu erreichen. Zwischen dem Betätigungsteil 22 und dem Formgebungsteil 21 kann ein im Querschnitt gesehen verjüngter Bereich 27 vorgesehen sein. Dadurch kann bei dem erfindungsgemäßen Verfahren insbesondere die Handhabung und die Einführung und/oder Entnahme des Verformungs-Werkzeugs 20 aus dem zum Umbug geformten oder vorgeformten Randbereich effektiver erfolgen.

Nach einer Ausführungsform ist das eine Formstück 40 bzw. sind die Formstücke 40, 50 in die Herstellungsvorrichtung integriert. Dazu weist die Herstellungsvorrichtung einen Stellmechanismus mit einer Bewegungskinematik auf, durch die das Formstück 40 bzw. die Formstücke 40, 50 mittels einer Betätigungsvorrichtung jeweils zwischen zwei Endstellungen bewegbar ist bzw. sind. Die Endstellungen werden im Folgenden eingefahrene Stellung und ausgefahrene Stellung oder Endstellung genannt, wobei die ausgefahrene Stellung jeweils diejenige Stellung ist, bei der das jeweilige Formstück die maximal vorgesehene Verformungsstellung zur Bildung des Umbugs U gemäß der jeweiligen Ausführungsform einnimmt.

Erfindungsgemäß kann vorgesehen sein, dass das Formstück 40 bzw. die Formstücke 40, 50 mittels einer Betätigungsvorrichtung geführt werden. Die Betätigungsvorrichtung kann mit der Betätigungsvorrichtung des Formwerkzeugs 20 integriert oder mit dieser identisch sein. Alternativ oder zusätzlich können die Stellmechaniken des zumindest einen Formstücks und des Formwerkzeugs 20 gekoppelt sein.

Insbesondere kann das eine Formstück bzw. können die zwei Formstücke eine Ausnehmung mit einer Innenfläche aufweisen, mit der das jeweilige Formstück an die jeweilige Seite des für die Bildung des Umbugs U vorgesehenen Randbereichs 5 angelegt wird und mit der das jeweilige Formstück den entsprechenden Abschnitt des Randbereichs 5 zur Ausbildung des Umbugs verformt. Die Innenfläche hat eine konkave Gestalt, so dass die Innenfläche die Form eines Abschnitts des herzustellenden oder vorzuformenden Umbugs bildet.

Dementsprechend weist bei der Ausführungsform der Figuren 1 bis 5 das erste Formstück 40 eine Ausnehmung 41 mit einer Innenfläche 44 auf, die eine konkave Gestalt hat. Ebenso weist dabei das zweite Formstück 50 eine Ausnehmung 51 mit einer Innenfläche 55 auf, die eine konkave Gestalt hat. Der Verlauf und die Gestalt der Innenfläche 44 des ersten Formstücks 40 und der Innenfläche 55 des zweiten Formstücks 50 sind derart gebildet, dass diese formgebend auf verschiedene Abschnitte des Umbug-Querschnitts wirken, wenn die Innenflächen 44, 55 an die jeweiligen Abschnitte des Randbereichs 5 angelegt werden und derart bewegt werden, dass diese die jeweiligen Abschnitte des Randbereichs 5 in eine vorbestimmte Verformungsstellung zur Ausbildung des Umbugs oder zur Ausbildung einer Zwischenform vor der Bildung des Umbugs (Verformungszustand des Vorformlings in der Figur 4) drücken.

Die erfindungsgemäße Ausführungsform nach den Figuren 1 bis 5 mit zwei bewegbaren Formstücken 40, 50 hat den Vorteil , dass - wie dies aus den Figuren 2 bis 5 hervorgeht - die Formstücke 40, 50 lediglich linear bewegbar sein müssen, um eine U-förmige Gestalt des Randbereichs 5 herzustellen (Figur 4). Der Pfeil P4 in der Figur 2 und der Pfeil P5 in der Figur 3 zeigt die Bewegungsrichtungen der Formstücke 40, 50 für diese Ausführungsform. Zur Ausbildung des in der Figur 4 gezeigten Verformungszustands des Vorformlings 1, bei dem zwei Teilabschnitte des Vorformlings 1 entlang zueinander verlaufen, d.h. dass die erste Oberseite 1a der zwei Teilabschnitte des Vorformlings einander zugewandt sind. Mit anderen Worten wird durch Linearbewegungen des ersten 40 und des zweiten 50 Formstücks eine U-förmige oder in etwa U-förmige Querschnittsgestalt des Randbereichs 5 erzeugt (Figur 4). Dabei ist die Ausgangsstellung des ersten Formstücks 40 (Figur 2) vor dessen insbesondere linearer Stellbewegung (Pfeil P4) unterhalb des Formwerkzeugs 20 und die Formgebungskontur oder Innenfläche 44 des ersten Formstücks 40 in einer Richtung quer zur Längserstreckung L des Randbereichs in seinem Ausgangszustand beabstandet von der von dem Abschnitt 24 der Verformungsoberfläche 23 des Formwerkzeugs 20, an den das erste Formstück 40 den jeweiligen Abschnitt 5c des zu verformenden Randbereichs 5 andrückt (Zustand gemäß Figur 3). Die Ausgangsstellung des zweiten Formstücks 50 (Figur 2) vor dessen insbesondere linearer Stellbewegung (Pfeil P5) kann derart vorgesehen sein, dass dieses auf derselben Seite der Längserstreckung L des Randbereichs 5 wie das Formwerkzeug 20, also z.B. in der Z-Richtung gesehen oberhalb des Randbereichs 5 gelegen ist (Zustand gemäß Figur 2). Dann erfolgt ein Bewegen des ersten Formstücks 40 mit einer Formgebungskontur 44 derart, dass die Formgebungskontur 44 des ersten Formstücks 40 in Anlage mit der entgegen gesetzt zu der ersten Seite 1a gelegenen zweiten Seite 1 b des ersten mittleren Bereichs 5c des Randbereichs 5 kommt. Durch entsprechendes Bewegen des ersten Formstücks 40 kommt die erste Seite 1a des ersten mittleren Abschnitts 5c des Randbereichs 5 in Anlage mit der Formgebungsoberfläche 23 (Figur 3). Durch eine entsprechende Ausführung der Stellmechanik für das erste Formstück 40 und das Formwerkzeug 20 kann insbesondere erreicht werden, dass für den beschriebenen Schritt eine reine Linearbewegung des Formstücks 40 ausreichend ist. Aufgrund des Andrückens des Abschnitts 5c durch die konkave Innenfläche 44 des ersten Formstücks 40 an den Oberflächenabschnitt 24 des Formwerkzeugs 20 wird der Randbereich 5 derart geschwenkt, dass die Längserstreckung L des Randbereichs 5 derart verläuft, dass das zweite Formstück 50 und insbesondere dessen Formgebungsfläche oder Innenfläche 55 gegenüber der Längserstreckung L auf einer anderen Seite liegt, als das Formwerkzeug 20 und insbesondere derjenige Abschnitt 25 von dessen Formgebungsoberfläche 23, an den in einem folgenden Schritt die erste Seite 1a des Randbereichs 5 durch die Stellbewegung des zweiten Formwerkzeugs 50 (Pfeil P5) angelegt oder angedrückt wird. Der Zustand des Randbereichs 5, in dem die erste Seite 1a des Randbereichs 5 durch die anschließende Stellbewegung des zweiten Formwerkzeug 50 (Pfeil P5) an den Abschnitt 25 der Formgebungsoberfläche 23 angelegt wird, ist in der Figur 4 gezeigt. Dabei hat der Randbereich 5 die beschriebene U-förmige oder in etwa U-förmige Querschnittsgestalt (Figur 4). Wie aus den Figuren 2 bis 4 hervorgeht, kann durch eine entsprechende Ausführung der Stellmechanik für das zweite Formstück 50 und das Formwerkzeug 20 insbesondere erreicht werden, dass für den beschriebenen Schritt eine reine Linearbewegung des Formstücks 50 ausreichend ist.

Wie in der Figur 4 gezeigt ist, kann die Länge des Randbereichs 5 und die Form wie Lage des Formwerkzeugs 20 derart vorgesehen sein, dass in diesem Zustand der am Rand 2 gelegene Abschnitt 5b auf einer Oberfläche des Formwerkzeugs 20 aufliegt und dort eine Krümmung des Randbereichs ausbildet, bei der sich das Ende 3 des Randbereichs 5 von dem Formwerkzeug 20 wegrichtet.

In den Figuren 6 bis 8 ist eine Ausführungsform eines erfindungsgemäßen Verfahrens gezeigt, bei dem die in etwa U-förmige Verformung des Randbereichs 5 mittels nur eines Formstücks 40 erfolgt, dessen Stellbewegung jedoch nicht linear verläuft. Stattdessen ist die Stellbewegung des in dieser Ausführungsform einen Formstücks 40 eine Schwenkbewegung P42, da bei der Stellbewegung P42 diese Ausführungsform die Innenfläche 44 entlang der zweiten Seite 1 b bewegt wird. Somit erfolgt bei dieser Ausführungsform ausgehend von dem in der Figur 6 dargestellten Zustand ein weiteres Bewegen des einen Formstücks 40 derart, dass ein mit der Bewegung des Formstücks 40 zunehmender und zweiter, neben dem ersten und näher am Rand 2 gelegener mittlerer Bereich 1 d des für die Bildung des Umbugs U vorgesehenen Randbereichs 5 in Anlage mit der Formgebungsoberfläche 23 kommt.

Das Formwerkzeug 20 ist z.B. durch das Vorsehen eines querschnittsverjüngten Bereichs zwischen dem Formgebungsteil 21 und einem Betätigungsteil 22, derart gestaltet und das Formwerkzeug 20 ist in seiner Formgebungsstellung (Figuren 2 bis 4 bzw. 6 und7) in Bezug auf die Lage und Form des Randbereichs 5 derart gelegen, dass nach der Ausbildung des U-förmigen Randbereichs ein Querschnittsbereich 5b desselben, der zwischen dem Rand 2 und dem mittleren in Anlage mit der Formgebungsoberfläche 23 befindlichen Bereich 5c, 5d gelegen ist, sich nicht in Anlage mit der Formgebungsoberfläche 23 befindet. Dabei liegen sich die jeweils erste Seite 1a des ersten 1 c und eines zweiten 1 d mittleren Bereichs jeweils gegenüber liegen, so dass die erste Seite 1a des für die Bildung des Umbugs U vorgesehenen Randbereichs 5 einen Raum R umgrenzt, in dem das Formwerkzeug 20 gelegen ist.

Anschließend wird das Formwerkzeug 20 aus dem Raum R herausgefahren, was in den Figuren 4 und 7 mit dem Pfeil P23 schematisch dargestellt ist.

Optional kann vorgesehen sein, dass das Formgebungsteil 21 oder zumindest der zur Anlage mit der ersten Seite 1a des Vorformlings 1 bestimmte Oberflächenbereich 24, 25 gekühlt ist. auf diese Weise wird das durch die Heizvorrichtung 15 erwärmte Vorformling-Material des Randbereichs 5 relativ schnell abgekühlt und in einen nicht mehr plastischen Zustand gebracht, so dass die entsprechenden Abschnitte 5c, 5d des Randbereich 5 relativ kurz nach der Anlage derselben an die Formgebungsoberfläche 23 in einen formstabilen Zustand übergehen. Dabei kann insbesondere vorgesehen sein, dass die zumindest die zur Anlage mit dem Randbereich 5 vorgesehenen Abschnitte 24, 25 der Formgebungsoberfläche 23 eine Temperatur zwischen 50 bis 100 Grad Celsius.

Nach einer Ausführungsform kann dieser Querschnittsverlauf des Randbereichs 5 als fertig gestellter Umbug behandelt werden. Dementsprechend kann nach Abkühlung des Randbereichs 5 der Vorformling 1 der Herstellungsvorrichtung entnommen werden.

Nach einem weiteren Ausführungsbeispiel wird zur Fertigstellung des Umbugs im Querschnittsverlauf des Randbereichs 5 gesehen diesem in einem weiteren Schritt mittels eines Schiebers 60 bei dessen Stellbewegung (Pfeil P6) eine stärkere Krümmung aufgeprägt.

Die Stellbewegung des Schiebers 60 kann manuell oder mittels eines Stellmechanismus ausgeführt werden. Dabei wird der Schieber auf die zweite Seite 1 b des Randbereichs 5 herunter gefahren, wobei das Formstück bzw. die Formstücke 40, 50 in der zweiten Stellung oder Andrückstellung verbleiben.

Die Endstellung des Schiebers kann so vorgesehen sein, dass ein Abstand zwischen den einander zugewandten Oberflächen maximal 5,0 mm und minimal 0,1 mm bleibt.

Alternativ kann vorgesehen sein, dass die wie einander zugewandten Seiten aufeinander gelegt oder gedrückt werden. Dadurch erfolgt ein Verkleben, da diese beiden Seiten.

Nach einer Ausführungsform der Erfindung kann das eine Formstück oder können die Formstücke gekühlt sein. Dabei kann vorgesehen sein, dass die jeweilige Innenfläche 44, 55 des zumindest einen Formstücks eine Temperatur zwischen 40 und 120 Grad Celsius und insbesondere 60 und 80 Grad Celsius hat. Das Vorsehen einer Temperatur zwischen 60 und 80 Grad Celsius Innenfläche 44, 55 des zumindest einen Formstücks ist insbesondere vorteilhaft bei der Verwendung von Stoffdekore, Schaumstofffolien oder Folien, die keine Lackschicht haben als Dekorschicht.

## Patentansprüche

1. Verfahren zur Herstellung eines Umbugs (U) an einem Rand (2) eines Kunststoffbauteils unter Ausbildung einer Biegung in einem quer zum Rand (2) verlaufenden Querschnitt des Randbereichs (5), wobei das Kunststoffbauteil aus zumindest einem aus einer oder mehreren thermoplastischen Schichten gebildeten Vorformling (1) mit einem für die Bildung des Umbugs (U) vorgesehenen Bereich (5) hergestellt wird, mit den Schritten:
- Positionieren einer Materialschicht (1) auf einer Auflagevorrichtung,
- Erwärmen des für die Bildung des Umbugs (U) vorgesehenen Randbereichs (5) der Materialschicht (1) mittels einer Heizvorrichtung (5),
- Anlegen eines Formwerkzeugs (20) mit einer konvexen Formgebungsoberfläche (23) an eine erste Seite (1 a) des für die Bildung des Umbugs (U) vorgesehenen Randbereichs (5),
- Bewegen zumindest eines Formstücks (40) mit einer Formgebungskontur (41),
- Herausfahren des Formwerkzeugs (20) aus dem von der ersten Seite (1 a) des für die Bildung des Umbugs (U) vorgesehenen Randbereichs (5) umgrenzten Raums,
**dadurch gekennzeichnet, dass**
das Bewegen des zumindest einen Formstücks (40) derart erfolgt, dass die Formgebungskontur (41) des Formstücks (40) in Anlage mit der entgegen gesetzt zu der ersten Seite (1 a) gelegenen zweiten Seite (1 b) eines ersten mittleren Bereichs (5c) des für die Bildung des Umbugs (U) vorgesehenen Randbereichs (5) kommt, und weiteres Bewegen des zumindest einen Formstücks (40) derart, dass ein mit der Bewegung des Formstücks (40) zunehmender und zweiter, neben dem ersten und näher am Rand (2) gelegener mittlerer Bereich (5d) des für die Bildung des Umbugs (U) vorgesehenen Randbereichs (5) in Anlage mit der Formgebungsoberfläche kommt, wobei ein Querschnittsbereich (5b), der zwischen dem Rand (2) und dem ersten und zweiten mittleren Bereich (5c, 5d) gelegen ist, nicht in Anlage mit der Formgebungsoberfläche gebracht wird, und wobei die jeweils erste Seite (1a) des ersten und eines zweiten mittleren Bereichs (5c, 5d) einander zugewandt liegen, so dass die erste Seite (1a) des für die Bildung des Umbugs (U) vorgesehenen Randbereichs (5) einen Raum umgrenzt, in dem das Formwerkzeug (20) gelegen ist.

2. Verfahren nach dem Anspruch 1, **dadurch gekennzeichnet, dass** nach dem Herausfahren des Formwerkzeugs (20) ein Bewegen eines Schiebers (60) auf den Querschnittsbereich (5b) vorgesehen ist, der zwischen dem Rand (2) und dem mittleren in Anlage mit der Formgebungsoberfläche (23) befindlichen Bereich (5c, 5d) gelegen ist, wobei der Schieber (60) auf die zweite Seite (1 b) des für die Bildung des Umbugs (U) vorgesehenen Randbereichs (5) aufgedrückt wird, so dass der am Rand (2) gelegene äußere Bereich (5b) in Richtung zum ersten mittleren Bereich (5c) bewegt wird.

3. Verfahren nach dem Anspruch 1 oder 2, **dadurch gekennzeichnet, dass** durch das Bewegen des Schiebers (60) der Querschnittsbereich (5b), der zwischen dem Rand (2) und dem mittleren in Anlage mit der Formgebungsoberfläche (23) befindlichen Bereich (5c, 5d) gelegen ist, mit dessen erster Seite (1 a) auf die erste Seite (1a) des Vorformlings gedrückt wird.

4. Verfahren nach einem der voranstehenden Ansprüche, **dadurch gekennzeichnet, dass** für das Erwärmen des für die Bildung des Umbugs (U) vorgesehenen Bereichs (5) eine Heizvorrichtung (5) auf der ersten Seite (1a) positioniert wird und das Erwärmen des für die Bildung des Umbugs (U) vorgesehenen Bereichs (5) mittels einer Heizvorrichtung (15) unter Verwendung einer Strahlenschutz-Vorrichtung (16) zur Abschirmung von Wärmestrahlen (S) der Strahlenschutz-Vorrichtung (16) gegen den Bereich (6), der außerhalb des für die Bildung des Umbugs (U) vorgesehenen Bereichs (15) gelegen ist, vorgenommen wird.

5. Verfahren nach einem der voranstehenden Ansprüche, **dadurch gekennzeichnet, dass** vor dem Anlegen des Formwerkzeugs (20) an den für die Bildung des Umbugs (U) vorgesehenen Randbereich (5) das Formgebungsteil (21) gekühlt wird.

6. Verfahren nach dem Anspruch 5, **dadurch gekennzeichnet, dass** die Formgebungsoberfläche (23) des Formwerkzeugs (20) bei dem Anlegen des Formwerkzeugs (20) an den für die Bildung des Umbugs (U) vorgesehenen Randbereich (5) eine Temperatur von 50 bis 100 Grad Celsius hat.

7. Verfahren nach einem der voranstehenden Ansprüche, **dadurch gekennzeichnet, dass** das In-Anlage-Bringen des ersten mittleren Bereichs (5c) des für die Bildung des Umbugs (U) vorgesehenen Randbereichs (5) mit der Formgebungsoberfläche (23) des Formwerkzeugs (20) durch die Bewegung eines ersten Formstücks (40) und das anschließende In-Anlage-Bringen des zweiten mittleren Bereichs (5d) des für die Bildung des Umbugs (U) vorgesehenen Randbereichs (5) mit der Formgebungsoberfläche (23) des Formwerkzeugs (20) durch die Bewegung eines zweiten Formstücks (50) erfolgt.

8. Verfahren nach dem Anspruch 5, **dadurch gekennzeichnet, dass** die Bewegung des ersten Formstücks (40) und des zweiten Formstücks (50) zum In-Anlage-Bringen des jeweiligen mittleren Bereichs (5c, 5d) des für die Bildung des Umbugs (U) vorgesehenen Randbereichs (5) mit der Formgebungsoberfläche (23) des Formwerkzeugs (20) jeweils eine Linearbewegung ist.

9. Herstellungsvorrichtung (V) zur Herstellung eines Umbugs (U) an einem Rand (2) eines Kunststoffbauteils unter Ausbildung einer Biegung in einem quer zum Rand (2) verlaufenden Querschnitt des Randbereichs (5), wobei das Kunststoffbauteil aus zumindest einem aus einer oder mehreren thermoplastischen Schichten gebildeten Vorformling (1) mit einem für die Bildung des Umbugs (U) vorgesehenen Bereich (5) hergestellt wird, die Herstellungsvorrichtung (V) aufweisend:
- eine Auflagevorrichtung zur Auflage einer umzuformenden Materialschicht (1),
- eine Heizvorrichtung (15)
- ein Formwerkzeug (20) mit einer konvexen Formgebungsoberfläche (23), das mittels einer Stellmechanik gegenüber der Auflagevorrichtung zwischen einer Ausgangsstellung und einer Formgebungsstellung bewegbar ist,
- zumindest ein Formstück (40, 50), das mittels einer Stellmechanik gegenüber der Auflagevorrichtung zwischen einer Ausgangsstellung und einer Formgebungsstellung, in der eine Innenfläche (44, 55) des zumindest einen Formstücks (40,50) der Formgebungsoberfläche (23) des Formwerkzeugs (20) zugewandt ist, bewegbar ist, um einen ersten mittleren Bereich (5c) des für die Bildung des Umbugs (U) vorgesehenen Randbereichs (5) einer auf der Auflagevorrichtung gelegenen Materialschicht mit der Formgebungsoberfläche (23) des Formwerkzeugs (20) in Anlage zu bringen,
**dadurch gekennzeichnet, dass** in der Formgebungsstellung des Formwerkzeugs (20) das zumindest eine Formstück (40, 50) in dessen Formgebungsstellung derart bewegbar ist, dass die Innenfläche (44, 55) des zumindest einen Formstücks (40,50) relativ zu der Formgebungsoberfläche (23) bewegbar ist, so dass ein mit der Bewegung des Formstücks (40) zunehmender und zweiter, neben dem ersten und näher am Rand (2) gelegener mittlerer Bereich (5d) des für die Bildung des Umbugs (U) vorgesehenen Randbereichs (5) in Anlage mit der Formgebungsoberfläche (23) gebracht werden kann, wobei ein Querschnittsbereich (5b), der zwischen dem Rand (2) und dem ersten und zweiten mittleren Bereich (5c, 5d) gelegen ist, nicht in Anlage mit der Formgebungsoberfläche (23) gebracht werden kann.

10. Herstellungsvorrichtung (V) nach dem Anspruch 9, **dadurch gekennzeichnet, dass** die Herstellungsvorrichtung (V) ein zweites bewegbares Formstück (50), aufweist, das vorgesehen ist für das In-Anlage-Bringen des zweiten mittleren Bereichs (5d) des für die Bildung des Umbugs (U) vorgesehenen Randbereichs (5), wobei die Bildung des Umbugs mit der Formgebungsoberfläche (23) des Formwerkzeugs (20) durch die Bewegung eines zweiten Formstücks (50) erfolgt.

11. Herstellungsvorrichtung (V) nach dem Anspruch 9 oder 10, **dadurch gekennzeichnet, dass** die Heizvorrichtung (15) mittels einer Stellmechanik gegenüber der Auflagevorrichtung zwischen einer Ausgangsstellung und einer Betriebsstellung bewegbar ist.

12. Herstellungsvorrichtung (V) nach einem der Anspruch 9 bis 11, **dadurch gekennzeichnet, dass** die Heizvorrichtung (15) eine Wandfläche (19) aufweist, die quer zur Längserstreckung des Randbereichs (5) und derart verläuft, dass die von der Heizvorrichtung (15) ausgehende Wärme von der Wandfläche (19) in Bezug auf den Bereich, der über den zur Umbugbildung vorgesehenen Randbereich (5) hinausgeht, abgehalten wird.

## Claims

1. Method for manufacturing a bent portion (U) on an edge (2) of a plastic component part with forming of a bending in a cross-section of the edge region (5), the cross-section running cross to the edge (2), wherein the plastic component part is formed of at least one preform (1) which is formed of one or more thermoplastic layers and which comprises a region (5) being provided for the formation of the bent portion (U), the method comprising the steps:
- positioning of a material layer (1) on a support device,
- heating the edge region (5) of the material layer (1) being provided for the formation of the bent portion (U) by means of a heating device (5),
- abutting of a convex forming surface (23) of a forming tool (20) to a first side (1a) of the edge region (5) being provided for the formation of the bent portion (U),
- moving of at least one form piece (40) comprising a forming contour (41),
- retracting of the forming tool (20) from the space which is defined by the first side (1 a) of the edge region (5) being provided for the formation of the bent portion (U),
**characterized in that**
the at least one form piece (40) is moved such that the forming contour (41) of the form piece (40) comes into contact with a second side (1 b) of a first middle portion (5c) of the edge region (5) being provided for the formation of the bent portion (U), the second side (1 b) lying contrary to the first side (1a), and further moving of the at least one form piece (40) such that a second middle portion (5d) of the edge region (5) being provided for the formation of the bent portion (U) which increases with the movement of the forming piece comes into contact with the forming surface, the second middle portion (5d) lying adjacent to the first middle portion (5c) and closer to the edge (2) than the first middle portion (5c), wherein a cross-section area (5b) which lies between the edge (2) and the first and the second middle portion (5c, 5d) is not brought into contact with the forming surface, and wherein the respective first side (1 a) of the first and the second middle portion (5c, 5d) face each other, so that the first side (1a) of the edge region (5) being provided for the formation of the bent portion (U) defines a space in which the forming tool (20) is positioned.

2. Method according to claim 1, **characterized in that** after retracting of the forming tool (20) a slider (60) is allowed to move to the cross-section area (5b) which lies between the edge (2) and the middle portion (5c, 5d) being in contact with the forming surface (23), wherein the slider (60) is pushed onto the second side (1b) of the edge region (5) being provided for the formation of the bent portion (U), so that outer area (5b) lying on the edge (2) is moved in the direction of the first middle portion (5c).

3. Method according to claim 1 or 2, **characterized in** by moving the slider (60), the cross-section area (5b) which lies between the edge (2) and the middle portion (5c, 5d) being in contact with the forming surface (23), with its first side (1a) is pushed to the first side (1a) of the preform.

4. Method according to one of the preceding claims, **characterized in that** for heating of the region (5) being provided for the formation of the bent portion (U) a heating device (15) is positioned on the first side (1a), and **in that** heating of the region (5) being provided for the formation of the bent portion (U) is carried out by means of a heating device (15) and by using a radiation protection device (16) for shielding of heat radiation (S) of the radiation protection device (16) against the area (6) which lies outside of the region (5) being provided for the formation of the bent portion (U).

5. Method according to one of the preceding claims, **characterized in that** before abutting the forming tool (20) to the edge region (5) being provided for the formation of the bent portion (U), the forming part (21) is cooled.

6. Method according to claim 5, **characterized in that** the forming surface (23) of the forming tool (20) has a temperature of 50 to 100 degree Celsius when being abutted to the edge region (5) being provided for the formation of the bent portion (U).

7. Method according to one of the preceding claims, **characterized in that** the first middle portion (5c) of the edge region (5) being provided for the formation of the bent portion (U) and the forming surface (23) of the forming tool (20) are contacted by a movement of the first forming piece (40) and **in that** subsequently the second middle portion (5d) of the edge region (5) being provided for the formation of the bent portion (U) is contacted by a movement of a second form piece (50).

8. Method according to claim 5, **characterized in that** each of the movements of the first form piece (40) and of the second form piece (50) for contacting the respective middle section (5c, 5d) of the edge region (5) being provided for the formation of the bent portion (U) with the forming surface (23) of the forming tool (20) is a linear movement.

9. Manufacturing device (V) for manufacturing a bent portion (U) on an edge (2) of a plastic component part with forming of a bending in a cross-section of the edge region (5), the cross-section running cross to the edge (2), wherein the plastic component part is formed of at least one preform (1) which is formed of one or more thermoplastic layers and which comprises a region (5) being provided for the formation of the bent portion (U), the manufacturing device (V) comprising:
- a support device for receiving a material layer (1) to be formed,
- a heating device (15),
- a forming tool (20) with a convex forming surface (23), the forming tool (20) being movable relative to the support device between a start position and a forming position by means of an adjustment device,
- at least one form piece (40, 50) which is movable relative to the support device between a start position and a forming position by means of an adjustment device, wherein in the forming position an inner surface (44, 55) of the at least one form piece (40, 50) faces the forming surface (23) of the forming tool (20), in order to contact a first middle portion (5c) of the edge region (5) being provided for the formation of the bent portion (U) of a material layer lying on the support device with the forming surface (23) of the forming tool (20),
**characterized in that** in the forming position of the forming tool (20) the at least one form piece (40, 50) in its forming position is movable such that the inner surface (44, 55) of the at least one form piece (40, 50) is movable relative to the forming surface (23), so that a second middle portion (5d) of the edge region (5) being provided for the formation of the bent portion (U) which increases with the movement of the form piece (40) can be brought in into contact with the forming surface (23), the second middle portion (5d) lying adjacent to the first middle portion (5d) and closer to the edge (2) than the first middle portion, wherein a cross-section area (5b) which lies between the edge (2) and the first and the second middle portion (5c, 5d) is not brought into contact with the forming surface (23).

10. Manufacturing device (V) according to claim 9, **characterized in that** the manufacturing device (V) comprises a second movable form piece (50) which is provided for contacting of the second middle portion (5d) of the edge region (5) being provided for the formation of the bent portion (U), wherein the bent portion is formed by the forming surface (23) of the forming tool (20) by the movement of a second form piece (50).

11. Manufacturing device (V) according to claim 9 or 10, **characterized in that** the heating device (15) by means of an adjustment device is movable relative to the support device between a start position and a working position.

12. Manufacturing device (V) according to one of the claims 9 to 11, **characterized in that** the heating device (15) comprises a wall surface (19) which runs cross to the longitudinal extension of the edge region (5) and which runs such that the heat being emitted from the heating device is blocked with respect to the area which goes beyond the edge region (5) being provided for the formation of the bent portion.

## Revendications

1. Procédé de fabrication d'un rabat (U) sur un bord (2) d'une pièce de construction en plastique en réalisant un cintrage dans une section transversale s'étendant transversalement au bord (2) de la périphérie (5), dans lequel la pièce de construction en plastique est fabriquée à partir d'au moins une ébauche (1) composée d'une ou plusieurs couches thermoplastiques une zone (5) prévue pour la formation du rabat (U), comprenant les étapes suivantes :
- positionnement d'une couche de matériau (1) sur un dispositif d'appui,
- réchauffement de la périphérie (5) prévue pour la formation du rabat (U) de la couche de matériau (1) au moyen d'un dispositif de chauffage (5),
- pose d'un outil de moulage (20) doté d'une surface de façonnage convexe (23) sur une première face (1 a) de la périphérie (5) prévue pour la formation du rabat (U)
- déplacement d'au moins une pièce de moulage (40) ayant un contour de façonnage (41),
- sortie de l'outil de moulage (20) de l'espace circonscrit par la première face (1 a) de la périphérie (5) prévue pour la formation du rabat (U),
**caractérisé en ce que**
le déplacement de l'au moins une pièce de moulage (40) a lieu de manière à ce que le contour de façonnage (41) de la pièce de moulage (40) vienne en contact avec la seconde face (1b) située à l'opposé de la première face (1a) d'une première zone médiane (5c) de la périphérie (5) prévue pour la formation du rabat (U) et poursuite du mouvement de l'au moins une pièce de moulage (40) de manière à ce qu'une seconde zone médiane (5d) située près de la première et plus près du bord (2) et augmentant au fur et à mesure du mouvement de la pièce de moulage (40) de la périphérie (5) prévue pour la formation du rabat (U) vienne en contact avec la surface de façonnage,
une zone de section transversale (5b) qui est située entre le bord (2) et les première et seconde zones médianes (5c, 5d) n'étant pas amenée en contact avec la surface de façonnage et la première face respective (1a) de la première et d'une seconde zone médiane (5c, 5d) étant tournées l'une vers l'autre de manière à ce que la première face (1a) de la périphérie (5) prévue pour la formation du rabat (U) circonscrive un espace dans lequel l'outil de moulage (20) est situé.

2. Procédé selon la revendication 1, **caractérisé en ce que**, après la sortie de l'outil de moulage (20), il est prévu un déplacement d'un curseur (60) sur la zone de section transversale (5b) qui est située entre le bord (2) et la zone médiane (5c, 5d) se trouvant en contact avec la surface de façonnage (23), le curseur (60) étant comprimé sur la seconde face (1 b) de la périphérie (5) prévue pour la formation du rabat (U) de manière à ce que la zone extérieure (5b) située au bord (2) soit déplacée en direction de la première zone médiane (5c).

3. Procédé selon la revendication 1 ou 2, **caractérisé en ce que** la zone de section transversale (5b) par le déplacement du curseur (60), laquelle zone de section transversale est située entre le bord (2) et la zone médiane (5c, 5d) se trouvant en contact avec la surface de façonnage (23) dont la première face (1a), est comprimée sur la première face (1a) de l'ébauche.

4. Procédé selon une des revendications précédentes, **caractérisé en ce que**, pour le réchauffement de la zone (5) prévue pour la formation du rabat (U), un dispositif de chauffage (5) est positionné sur la première face (1a) et que le réchauffement de la zone (5) prévue pour la formation du rabat (U) est effectué au moyen d'un dispositif de chauffage (5) en utilisant un dispositif de protection contre les rayons (16) afin de permettre une isolation contre les rayons thermiques (S) par le dispositif de protection contre les rayons (16) par rapport à la zone (6) qui est située en dehors de la zone (15) prévue pour la formation du rabat (U).

5. Procédé selon une des revendications précédentes, **caractérisé en ce que**, avant la pose de l'outil de moulage (20) sur la périphérie (5) prévue pour la formation du rabat (U), la pièce de façonnage (21) est refroidie.

6. Procédé selon la revendication 5, **caractérisé en ce que** la surface de façonnage (23) de l'outil de moulage (20), lors de la pose de l'outil de moulage (20) sur la périphérie (5) prévue pour la formation du rabat (U), a une température allant de 50 à 100 degrés Celsius des.

7. Procédé selon une des revendications précédentes, **caractérisé en ce que** la mise en contact de la première zone médiane (5c) de la périphérie (5) prévue pour la formation du rabat (U) avec la surface de façonnage (23) de l'outil de moulage (20) est effectuée par le déplacement d'une première pièce de moulage (40) et la mise en contact consécutive de la seconde zone médiane (5d) de la périphérie (5) prévue pour la formation du rabat (U) avec la surface de façonnage (23) de l'outil de moulage (20) par le déplacement d'une seconde pièce de moulage (50).

8. Procédé selon la revendication 5, **caractérisé en ce que** le mouvement de la première pièce de moulage (40) et de la seconde pièce de moulage (50) pour mettre en contact la zone médiane respective (5c, 5d) de la périphérie (5) prévue pour la formation du rabat (U) avec la surface de façonnage (23) de l'outil de moulage (20) est respectivement un mouvement linéaire.

9. Dispositif de fabrication (V) pour la fabrication d'un rabat (U) au bord (2) d'une pièce de construction en plastique en réalisant un cintrage dans une section transversale s'étendant transversalement au bord (2) de la périphérie (5), dans lequel la pièce de construction en plastique est fabriquée à partir d'au moins une ébauche (1) constituée d'une ou plusieurs couches thermoplastiques avec une zone (5) prévue pour la formation du rabat (U), le dispositif de fabrication (V) présentant :
- un dispositif d'appui pour l'appui d'une couche de matériau (1) à transformer
- un dispositif de chauffage (5)
- un outil de moulage (20) doté d'une surface de façonnage convexe (23) et qui peut être déplacé au moyen d'un mécanisme de réglage par rapport au dispositif d'appui entre une position initiale et une position de façonnage
- au moins une pièce de moulage (40, 50) qui peut être déplacée au moyen d'un mécanisme de réglage par rapport au dispositif d'appui entre une position initiale et une position de façonnage dans laquelle une surface interne (44, 55) de l'au moins une pièce de moulage (40, 50) est tournée vers la surface de façonnage (23) de l'outil de moulage (20) afin d'amener une première zone médiane (5c) de la périphérie (5c) prévue pour former le rabat (U) d'une couche de matériau située sur le dispositif d'appui en contact avec la surface de façonnage (23) de l'outil de moulage (20),
**caractérisé en ce que**, dans la position de façonnage de l'outil de moulage (20), l'au moins une pièce de moulage (40, 50) peut être déplacée dans sa position de façonnage de manière à ce que la surface interne (44, 55) de l'au moins une pièce de moulage (40, 50) puisse être déplacée par rapport à la surface de façonnage (23) de manière à ce qu'une seconde zone médiane (5d) située près de la première et plus près du bord (2) et augmentant au fur et à mesure du mouvement de la pièce de moulage (40) de la périphérie (5) prévue pour la formation du rabat (U) puisse être amenée en contact avec la surface de façonnage (23), une zone de section transversale (5b) qui est située entre le bord (2) et les première et seconde zones médianes (5c, 5d) ne pouvant pas être amenée en contact avec la surface de façonnage (23).

10. Dispositif de fabrication (V) selon la revendication 9, **caractérisé en ce que** le dispositif de fabrication (V) présente une seconde pièce de moulage mobile (50) qui est prévue pour la mise en contact de la seconde zone médiane (5d) de la zone (5) prévue pour la formation du rabat (U), la formation du rabat à l'aide de la surface de façonnage (23) de l'outil de moulage (20) étant réalisé par le déplacement d'une seconde pièce de moulage (50).

11. Dispositif de fabrication (V) selon la revendication 9 ou 10, **caractérisé en ce que** le dispositif de chauffage (15) peut être déplacé au moyen d'un mécanisme de réglage par rapport au dispositif d'appui entre une position initiale et une position de fonctionnement.

12. Dispositif de fabrication (V) selon une des revendications 9 à 11, **caractérisé en ce que** le dispositif de chauffage (15) présente une surface de paroi (19) qui s'étend transversalement à l'extension longitudinale de la périphérie (5) et de manière à ce que la chaleur émanant du dispositif de chauffage (15) soit arrêtée par la surface de paroi (19) par rapport à la zone qui va au-delà de la périphérie (5) prévue pour la formation du rabat.
